Europäisches Patentamt

European Patent Office

Office européen des brevets

(19)

(11) **EP 0 985 813 B1**

(12) **FASCICULE DE BREVET EUROPEEN**

(45) Date de publication et mention
de la délivrance du brevet:
**22.10.2003 Bulletin 2003/43**

(51) Int Cl.[7]: **F02D 41/14**, G05B 13/04

(21) Numéro de dépôt: **99117145.5**

(22) Date de dépôt: **31.08.1999**

(54) **Procédé de commande d'un moteur à combustion interne**

Verfahren zur Steuerung einer Brennkraftmaschine

Method for controlling an internal combustion engine

(84) Etats contractants désignés:
**DE ES GB IT**

(30) Priorité: **08.09.1998 FR 9811178**

(43) Date de publication de la demande:
**15.03.2000 Bulletin 2000/11**

(73) Titulaire: **Siemens VDO Automotive S.A.S.
31036 Toulouse Cédex 01 (FR)**

(72) Inventeur: **Sans, Mariano
31700 Blagnac (FR)**

(74) Mandataire: **Berg, Peter, Dipl.-Ing. et al
European Patent Attorney,
Siemens AG,
Postfach 22 16 34
80506 München (DE)**

(56) Documents cités:
**EP-A- 0 544 001          EP-A- 0 582 085
FR-A- 2 758 590          US-A- 4 928 484
US-A- 5 771 482**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention est relative à un procédé de commande d'un moteur à combustion interne, et plus particulièrement à un procédé exploitant un modèle du moteur pour définir les commandes à appliquer en vue d'obtenir un résultat escompté.

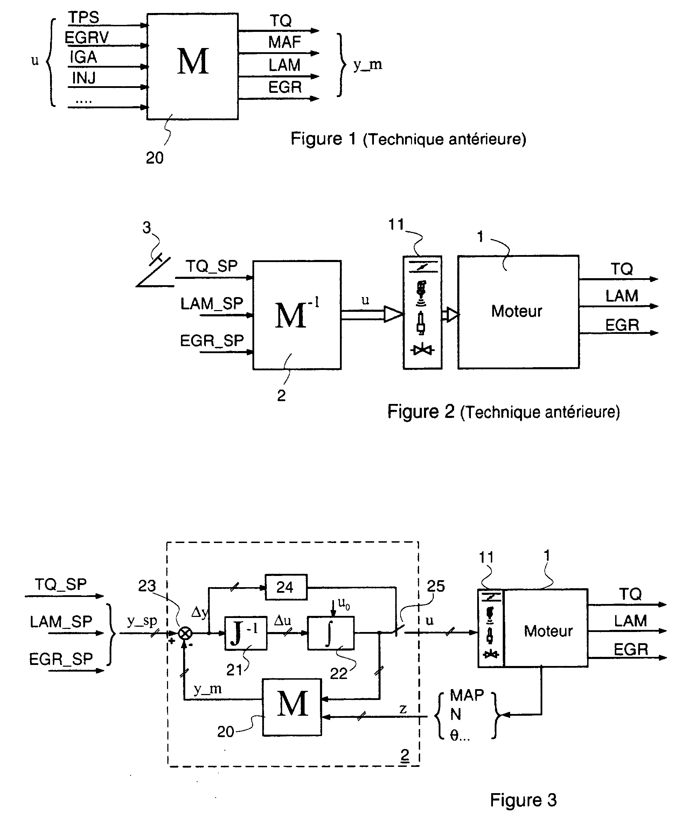

Les techniques modernes de commande des moteurs à combustion interne font de plus en plus appel à la modélisation mathématique des moteurs afin de réaliser des procédés de commande plus robustes, propres à prendre en compte plus précisément les exigences des conducteurs des véhicules automobiles qui en sont équipés et les contraintes des réglementations relatives à la pollution. Ces modèles, tel que celui représenté à la figure 1, permettent, à partir d'un jeu de commandes **u** tel que l'ensemble formé par l'angle d'ouverture TPS du papillon des gaz, l'angle d'ouverture EGRV d'une vanne de recirculation des gaz d'échappement, l'angle d'avance à l'allumage IGA, la quantité INJ de carburant injecté, etc. d'estimer des variables de sortie **y** du moteur telles que le couple TQ fourni, la quantité d'air aspirée MAF, la richesse LAM des gaz d'échappement et leur taux de recirculation EGR, variables qui ne sont pas toujours mesurables directement et économiquement sur le moteur réel.

On connaît, par exemple de la demande de brevet français FR-A-2 758 590 un procédé de commande d'un moteur à combustion interne, représenté de manière simplifiée à la figure 2, dans lequel on détermine à partir de l'enfoncement d'une pédale d'accélérateur 3 un couple de consigne TQ_SP que l'on applique à un modèle inverse $M^{-1}$ du moteur (ainsi que d'autres consignes éventuelles LAM_SP et EGR_SP), pour en tirer un jeu de commandes **u** à appliquer à des moyens de réglage 11 du moteur 1. Cependant, un tel modèle inverse doit être obtenu par une inversion analytique du modèle direct **M** de la figure 1, ce qui dans le cas de modèles multivariables (multiples entrées et multiples sorties) est une opération extrêmement complexe. De plus, les différents coefficients des équations analytiques formant le modèle direct sont en général obtenus expérimentalement par identification du modèle avec le moteur réel et mémorisés dans de multiples tables cartographiques. Lors d'une inversion du modèle direct, ces tables doivent être inversées ce qui, compte tenu de la non-linéarité des coefficients, entraîne souvent des indéterminations ou des imprécisions nuisibles à l'efficacité du procédé de commande. En outre, toute modification du modèle direct, ne fut-ce que d'un seul coefficient, doit entraîner une nouvelle inversion complète du modèle, rendant ainsi le développement et la mise au point extrêmement longs et coûteux.

La présente invention a donc pour but de proposer un procédé de contrôle d'un moteur à combustion interne qui, tout en conservant les avantages des procédés de la technique antérieure, ne présente pas les difficultés liées à l'inversion des modèles utilisés.

On atteint ces buts de l'invention, ainsi que d'autres qui apparaîtront dans la suite de la présente description, au moyen d'un procédé de commande d'un moteur à combustion interne, dans lequel on détermine un jeu de consignes de variables de sortie du moteur, on applique ces consignes à un modèle inverse du moteur et on en tire un jeu de commandes à appliquer à des moyens de réglage du moteur, caractérisé en ce que l'on élabore le modèle inverse du moteur à partir d'une exploitation itérative d'une boucle comportant d'une part un modèle direct du moteur et d'autre part une matrice de correction des entrées du modèle direct en fonction de ses sorties.

Selon le procédé objet de l'invention, on fournit un jeu de commandes initiales au modèle direct du moteur, on compare l'estimation des variables de sortie fournie par le modèle au jeu de consignes et on en tire un vecteur d'écart, on traite ce vecteur d'écart par la matrice de correction pour en tirer un vecteur de correction des commandes et on somme le vecteur de correction avec le jeu de commandes initiales pour obtenir le jeu de commandes à appliquer aux moyens de réglage.

Selon un premier mode de mise en oeuvre du procédé, les étapes ci-dessus sont répétées avec une récurrence temporelle prédéterminée, en utilisant à chaque itération le jeu de commandes obtenu lors de l'itération précédente comme jeu de commandes initiales. Dans un second mode de mise en oeuvre du procédé, une série d'itérations est déclenchée à chaque point mort haut du moteur, on intègre les vecteurs de correction successifs, et le jeu de commandes n'est appliqué aux moyens de réglage que lorsque le vecteur d'écart relatif est inférieur à un seuil prédéterminé. Dans ce dernier mode, on utilise, à chaque point mort haut du moteur, le jeu de commandes appliqué au point mort haut précédent comme jeu de commandes initiales.

Suivant une caractéristique importante de la présente invention, la matrice de correction est obtenue par inversion ou pseudo inversion de la matrice jacobienne des dérivées partielles des variables de sortie du moteur par rapport aux commandes. Avantageusement, l'influence des paramètres à variation lente est négligée dans le calcul des coefficients de la matrice jacobienne et le modèle direct reçoit un vecteur d'état représentatif des conditions de fonctionnement actuelles du moteur comprenant une mesure de ces paramètres.

Selon une première variante, la matrice de correction est déterminée expérimentalement lors d'essais de mise au point du moteur et ses coefficients sont mémorisés dans une table en fonction des conditions de fonctionnement du moteur. Selon une deuxième variante, la matrice jacobienne est déterminée à chaque itération à partir d'une estimation des dérivées partielles tirée du calcul de la variation des sorties du modèle direct en fonction d'une variation unitaire d'une de ses entrées autour du point de fonctionnement courant.

D'autres caractéristiques et avantages du procédé suivant l'invention apparaîtront à la lecture de la description qui va suivre et à l'examen des dessins annexés dans lesquels :

- la figure 1 représente un modèle de moteur couramment employé dans la technique antérieure,
- la figure 2 représente un exemple d'un procédé de commande de la technique antérieure,
- la figure 3 représente un diagramme fonctionnel du procédé de commande selon l'invention et
- les figures 4 à 6 représentent des organigrammes de fonctionnement du procédé de commande selon l'invention.

Comme on l'a vu dans le préambule, en relation avec la figure 1, un modèle $M$ de moteur à combustion interne est un ensemble d'équations, en général non linéaires, auquel on fournit en entrée un jeu de commandes $u$ représentant les commandes appliquées à différents actionneurs tels qu'un papillon des gaz ou un injecteur de carburant. A partir de ce jeu de commandes, le modèle calcule et fait évoluer des variables d'état internes (non représentées) telles que le régime moteur ou la pression dans le collecteur d'admission, et propose en sortie une estimation $y\_m$ de variables de sortie telles que le couple fourni TQ, la quantité d'air aspirée MAF, la richesse de combustion LAM ou le taux de recirculation des gaz d'échappement EGR. Ces estimations sont par exemple utilisées pour évaluer des variables de sortie non directement mesurables. On utilise également ce modèle dans sa forme inverse $M^{-1}$ (figure 2) pour déterminer le jeu de commande $u$ à appliquer aux moyens de réglage 11 pour obtenir des variables de sortie du moteur 1 correspondant à un jeu de consignes $y\_sp$ de ces variables de sortie.

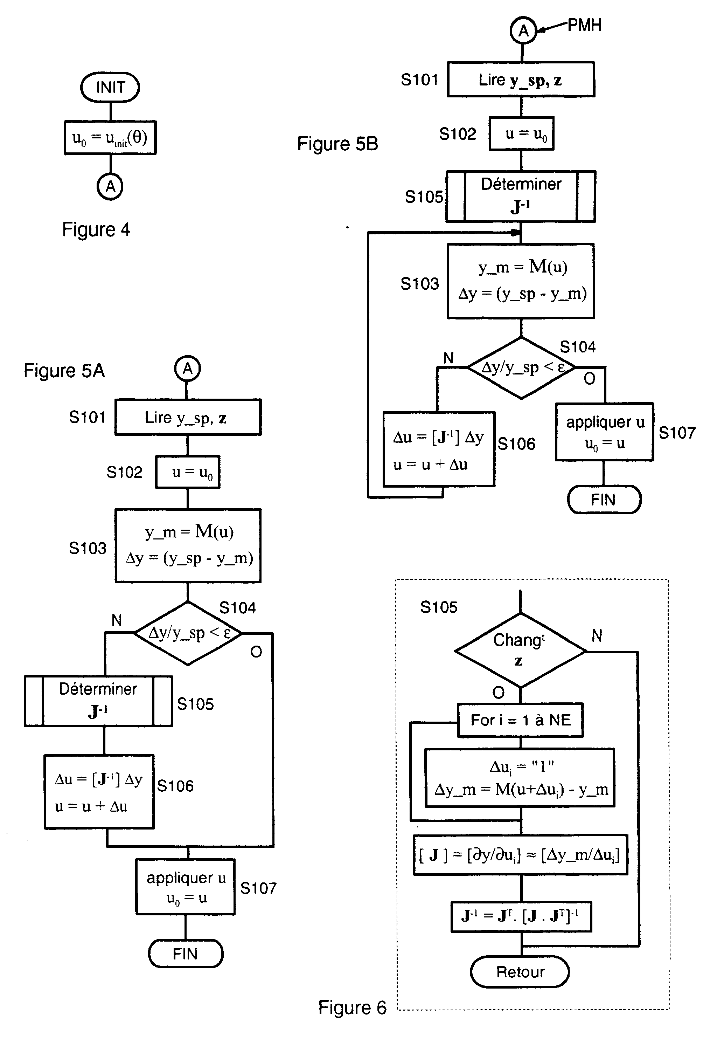

On se réfère maintenant à la figure 3 dans laquelle on a représenté sous forme de schéma blocs le procédé de commande selon l'invention. Un jeu de consignes $y\_sp$ comportant par exemple des consignes de couple (TQ_SP), de richesse (LAM_SP) et de taux de recirculation des gaz d'échappement (EGR_SP) est fourni à un bloc 2 d'application du modèle inverse $M^{-1}$ représenté dans le cadre en pointillés. Ce bloc 2 comporte un bloc 20 d'application d'un modèle direct $M$ du moteur 1 qui reçoit d'une part un vecteur d'état $z$ représentatif des conditions de fonctionnement actuelles du moteur 1. Ce vecteur d'état est constitué par exemple de mesures effectuées en temps réel sur le moteur, comme la pression collecteur MAP, le régime de rotation $N$, la température du liquide de refroidissement θ, etc. L'utilisation de ce vecteur d'état permet avantageusement d'employer un modèle $M$ simplifié et/ou de limiter la divergence de celui-ci. Le bloc 20 reçoit d'autre part un jeu de commandes $u$ élaboré par un bloc intégrateur 22 qui sera détaillé par la suite. Sur la base du jeu de commandes $u$ et du vecteur d'état $z$, le modèle direct $M$ du bloc 20 fournit une estimation $y\_m$ des variables de sortie du moteur 1. Cette estimation est comparée au jeu de consigne $y\_sp$ dans un sommateur 23 pour former un vecteur d'écart $\Delta y$. Ce vecteur d'écart est alors fourni à un bloc 21 de calcul et d'application d'une matrice de correction $J^{-1}$ dont le fonctionnement détaillé sera explicité ultérieurement en relation avec les figures 5 et 6. Le bloc 21 fournit à son tour au bloc intégrateur 22 un vecteur de correction $\Delta u$ à appliquer au jeu de commandes $u$. Les vecteurs de correction $\Delta u$ successifs sont intégrés par le bloc intégrateur 22 en partant d'un jeu de commandes initiales $u_0$ pour obtenir un jeu de commandes $u$ propre à minimiser le vecteur d'écart $\Delta y$. On a ainsi réalisé une boucle dont l'exploitation itérative permet à partir d'un jeu de consignes $y\_sp$ de définir un jeu de commandes $u$ applicable aux moyens de réglage 11 du moteur 1, sans avoir besoin d'inverser de manière analytique le modèle $M$ du moteur. On a également représenté sur la figure 3 un bloc comparateur 24 qui reçoit le vecteur d'écart $\Delta y$ et commande un commutateur 25 permettant ainsi de ne transmettre le jeu de commande $u$ aux moyens de réglage 11 que sous certaines conditions. Ces deux éléments sont optionnels et ne sont utilisés que dans un second mode de mise en oeuvre du procédé qui sera détaillé ultérieurement.

Dans un premier mode de mise en oeuvre du procédé, la boucle décrite ci-dessus est exécutée avec une récurrence temporelle prédéterminée, de façon asynchrone par rapport au cycle de fonctionnement du moteur 1, et le jeu de commande $u$ en sortie du bloc intégrateur 22 est transmis en permanence aux moyens de réglage 11. Lors du démarrage du moteur 1, on procède à une phase d'initialisation du procédé selon le processus décrit à la figure 4. On a en effet remarqué que les conditions de démarrage du moteur dépendaient essentiellement de la température de celui-ci, avantageusement mesurée par la température du liquide de refroidissement θ. A la mise sous tension d'un calculateur adapté pour appliquer le procédé de l'invention, le calculateur mesure la température θ et détermine, dans une table définie par des essais préalables et mémorisée dans le calculateur, un jeu de commandes $u_{init}(θ)$ comprenant par exemple un angle d'ouverture du papillon des gaz, une quantité de carburant à injecter, un angle d'allumage, etc. Ce jeu de commandes est appliqué aux moyens de réglage 11 et considéré comme jeu de commandes initiales $u_0$. On procède alors à l'étape S101 de la figure 5A dans laquelle on lit le jeu de consignes $y\_sp$ et le vecteur d'état $z$. A l'étape S102, on affecte au jeu de commande $u$ courant la valeur du jeu de commandes initiales $u_0$ et à l'étape S103, on calcule l'estimation des variables de sortie $y\_m$ en appliquant le jeu de commande $u$ au modèle $M$. On forme également le vecteur d'écart $\Delta y$ en effectuant la différence entre le jeu de consignes $y\_sp$ et l'estimation $y\_m$ obtenue. Lors de l'étape S104, on teste si le vecteur d'écart relatif $\Delta y/y\_sp$ est inférieur à un ensemble de valeurs prédéterminé ε afin de vérifier si le jeu de commandes $u$ est propre à fournir le résultat escompté. On notera cependant que ce test est optionnel et n'a pour effet que d'éviter les étapes S105 et S106 si le résultat est positif pour économiser du temps de calcul. Si ce test n'est pas effectué ou si le résultat du test est négatif, on procède à la détermination de la matrice de correction à l'étape S105.

La matrice de correction $\mathbf{J^{-1}}$ est constituée par des coefficients qui déterminent le sens et l'intensité de la variation qu'il faut appliquer à chaque élément du jeu de commande $\mathbf{u}$ pour obtenir une variation prédéterminée de chacune des variables de sortie $\mathbf{y}$, et ce, pour chaque point de fonctionnement du moteur. Pour déterminer ces coefficients, on commence par déterminer la matrice jacobienne $\mathbf{J}$ ou matrice des dérivées partielles du système constitué par le moteur 1 et les moyens de réglage 11 en appliquant à chaque commande $\mathbf{u_i}$ du jeu de commande $\mathbf{u}$ une variation unitaire et en observant la variation induite des variables de sortie $\mathbf{y}$. Représentant un processus physique, cette matrice jacobienne est régulière et peut être inversée (si la matrice est carrée, c.a.d. si le nombre de commandes en entrée est égal au nombre des variables de sortie observées) ou « pseudo-inversée » selon l'une des formules :

$$J^{-1} = J^{T} \cdot [J \cdot J^{T}]^{-1} \qquad \text{(nombre d'entrées > nombre de sorties)}$$

ou

$$J^{-1} = [J^{T} \cdot J]^{-1} \cdot J^{T} \qquad \text{(nombre d'entrées < nombre de sorties)}$$

en fonction du nombre respectif des commandes en entrée et des variables de sortie du modèle direct considéré, formules dans lesquelles $\mathbf{J^T}$ est la matrice transposée de $\mathbf{J}$. On obtient ainsi la matrice de correction $\mathbf{J^{-1}}$.

Selon une première variante du procédé, les coefficients de la matrice de correction sont obtenus expérimentalement lors d'essais de mise au point du moteur. Ces coefficients sont ensuite mémorisés dans des tables en fonction des conditions de fonctionnement du moteur, par exemple en fonction de la pression dans le collecteur d'admission MAP et du régime de rotation N, éléments essentiels du vecteur d'état $\mathbf{z}$. Selon cette variante, lors de l'étape S105, on extrait des tables les coefficients de la matrice de correction $\mathbf{J^{-1}}$ en fonction des valeurs du vecteur d'état.

Selon une autre variante, représentée à la figure 6 comme un sous programme appelé par l'étape S105, on utilise une estimation des dérivées partielles tirée du modèle direct $\mathbf{M}$ pour déterminer par calcul la matrice de correction. A cette fin, on commence par vérifier si les conditions de fonctionnement du moteur représentées par le vecteur d'état $\mathbf{z}$ ont changé. Si ce n'est pas le cas, la matrice de correction précédemment calculée est toujours applicable et on sort du sous programme. Si un changement d'état s'est produit depuis le précédent passage, on entre dans une boucle où à chaque commande, on applique une variation unitaire $\Delta\mathbf{u_i}$ et on calcule au moyen du modèle direct $\mathbf{M}$, dans les conditions fixées par le vecteur d'état $\mathbf{z}$, une variation $\Delta\mathbf{y\_m}$ de l'estimation des variables de sortie. On construit alors la matrice jacobienne J à partir des variations relatives $\Delta\mathbf{y\_m}/\Delta\mathbf{u_i}$ que l'on inverse au moyen de l'une des formules vues précédemment pour obtenir la matrice de correction $\mathbf{J^{-1}}$.

Avantageusement, pour réduire la quantité de mémoire nécessaire dans la première variante ou le temps de calcul dans la seconde, on se limite, lors de la détermination des coefficients de la matrice de correction, aux modes gouvernables essentiels, c'est à dire ayant une influence primordiale sur les variables de sortie. De même, on négligera l'influence, sur ces coefficients, des paramètres à variation lente, tels que la température $\theta$ du moteur par exemple. La prise en compte de ces paramètres est alors faite par l'intermédiaire du vecteur d'état $\mathbf{z}$, fourni au modèle direct.

On en revient à la figure 5A, où, à l'étape S106, on utilise le vecteur d'écart $\Delta\mathbf{y}$ calculé à l'étape S103 et la matrice de correction $\mathbf{J^{-1}}$ de l'étape S105 pour déterminer un vecteur de correction $\Delta\mathbf{u}$ qui est sommé par l'intermédiaire du bloc intégrateur 22 de la figure 3 au jeu de commande actuel pour obtenir un nouveau jeu de commandes $\mathbf{u}$. Ce jeu de commandes est alors appliqué aux moyens de réglage 11 du moteur à l'étape S107 et mémorisé pour servir de jeu de commandes initiales $\mathbf{u_0}$ lors de la prochaine itération. Comme on l'a vu précédemment, dans ce mode de mise en oeuvre du procédé, ces itérations sont déclenchées avec une récurrence temporelle prédéterminée et de manière asynchrone par rapport au cycle de combustion du moteur.

Dans un second mode de mise en oeuvre du procédé, on déclenche, à chaque point mort haut du moteur, un calcul itératif du jeu de commandes $\mathbf{u}$ à appliquer. On se réfère à la figure 5B qui représente un logigramme de ce mode de mise en oeuvre. On remarquera que seul l'enchaînement des étapes du procédé diffère de la figure 5A, les étapes elles-mêmes restant essentiellement identiques à celles de la figure 5A et seront donc repérées de manière identique. Après une initialisation au démarrage du moteur qui s'effectue conformément à la figure 4 déjà décrite, chaque point mort haut (PMH) du moteur déclenche la lecture du jeu de consignes $\mathbf{y\_sp}$ et du vecteur d'état $\mathbf{z}$ (S101), l'initialisation du jeu de commandes courant par le jeu de commandes initiales déterminé lors du précédent PMH (S102) et la détermination de la matrice de correction $\mathbf{J^{-1}}$ (S105) qui s'effectue selon l'une quelconque des variantes décrites en relation avec le premier mode de mise en oeuvre. On procède alors à l'étape S103 dans laquelle on détermine une estimation $\mathbf{y\_m}$ des variables de sorties à partir de l'application du jeu de commande $\mathbf{u}$ courant au modèle $\mathbf{M}$ et un vecteur d'écart $\Delta\mathbf{y}$. On compare ensuite le vecteur d'écart relatif $\Delta\mathbf{y}/\mathbf{y\_sp}$ à un ensemble de valeurs de seuil $\varepsilon$ prédéterminé. Si le vecteur d'écart relatif $\Delta\mathbf{y}/\mathbf{y\_sp}$ n'est pas inférieur à l'ensemble de valeurs de seuil $\varepsilon$, on calcule à l'étape S106 un vecteur de correction Δ**u** du jeu de commande par application du vecteur d'écart Δ**y** à la matrice de correction **J$^{-1}$** et on intègre ce vecteur de correction au jeu de commandes pour en tirer un nouveau jeu de commandes **u** qui sera renvoyé à l'étape S103. On procède ainsi par itération et intégrations successives des vecteurs de correction jusqu'à ce que le test de l'étape S104 soit positif. Dans ce cas, on passe à l'étape S107, dans laquelle le jeu de commande **u** obtenu est appliqué aux moyens de réglage 11 et mémorisé pour servir de jeu de commandes initiales $u_0$ lors du cycle déclenché par le prochain PMH.

Bien entendu, l'invention n'est pas limitée aux modes de mise en oeuvre décrits ci-dessus qui n'ont été donnés qu'à titre d'exemples. On pourra également combiner les deux modes en fonction du temps de calcul disponible, en utilisant le second à bas régime, lorsque l'intervalle temporel entre deux PMH est long et le premier à haut régime. De même, la détermination de la matrice de correction peut être faite dans un premier temps sur la base d'essais du moteur puis affinée au moyen d'un processus d'apprentissage par les valeurs calculées à partir du modèle.

**Revendications**

1. Procédé de commande d'un moteur à combustion interne (1), selon lequel on détermine un jeu de consignes (y_sp) de variables de sortie (y) du moteur, on applique ces consignes à un modèle inverse (**M$^{-1}$**) du moteur et on en tire un jeu de commandes (u) à appliquer à des moyens de réglage (11) du moteur, **caractérisé en ce que** l'on élabore le modèle inverse du moteur à partir d'une exploitation itérative d'une boucle comportant d'une part un modèle direct (**M**) du moteur et d'autre part une matrice de correction (**J$^{-1}$**) des entrées du modèle direct en fonction de ses sorties.

2. Procédé selon la revendication 1, **caractérisé en ce que**

   a) on fournit un jeu de commandes initiales ($u_0$) au modèle direct (**M**) du moteur
   b) on compare l'estimation (y_m) des variables de sortie fournie par le modèle au jeu de consignes (y_sp) et on en tire un vecteur d'écart (Δy),
   c) on traite ce vecteur d'écart par la matrice de correction (**J$^{-1}$**) pour en tirer un vecteur de correction (Δu) des commandes et
   d) on somme le vecteur de correction avec le jeu de commandes initiales pour obtenir le jeu de commandes (u) à appliquer aux moyens de réglage (11).

3. Procédé selon la revendication 2, **caractérisé en ce que** les opérations a) à d) sont répétées avec une récurrence temporelle prédéterminée et **en ce que** le jeu de commandes (u) de l'étape d) sert de jeu de commandes initiales ($u_0$) à l'étape a) de l'itération suivante.

4. Procédé selon la revendication 2, **caractérisé en ce qu'**une série d'itérations des opérations a) à d) est déclenchée à chaque point mort haut du moteur, **en ce que** à l'étape d) on intègre les vecteurs de correction (Δu) successifs, et **en ce que** le jeu de commandes (u) de l'étape d) n'est appliqué aux moyens de réglage que lorsque le vecteur d'écart relatif (Δy/y_sp) de l'étape b) est inférieur à un seuil prédéterminé.

5. Procédé selon la revendication 4, **caractérisé en ce qu'**à chaque point mort haut du moteur, le jeu de commandes initiales ($u_0$) de l'étape a) est le jeu de commande (u) appliqué au point mort haut précédent.

6. Procédé selon la revendication 2, **caractérisé en ce que** la matrice de correction (**J$^{-1}$**) est obtenue par inversion ou pseudo inversion de la matrice jacobienne (**J**) des dérivées partielles des variables de sortie (y) du moteur par rapport aux commandes.

7. Procédé selon la revendication 6, **caractérisé en ce que** l'influence des paramètres à variation lente (θ) est négligée dans la calcul des coefficients de la matrice jacobienne et **en ce que** le modèle direct reçoit un vecteur d'état (z) représentatif des conditions de fonctionnement (MAP, N, θ) actuelles du moteur comprenant une mesure de ces paramètres.

8. Procédé selon la revendication 6, **caractérisé en ce que** la matrice de correction est déterminée expérimentalement lors d'essais de mise au point du moteur et **en ce que** ses coefficients sont mémorisés dans une table en fonction des conditions de fonctionnement (MAP, N) du moteur.

9. Procédé selon la revendication 6, **caractérisé en ce que** la matrice jacobienne est déterminée à chaque itération à partir d'une estimation des dérivées partielles tirée du calcul de la variation des sorties du modèle direct en fonction d'une variation unitaire d'une de ses entrées autour du point de fonctionnement courant.

10. Procédé selon la revendication 2, **caractérisé en ce que** lors du démarrage du moteur, le jeu de commandes initiales ($u_0$) est déterminé en fonction de la température ($\theta$) du moteur.

**Patentansprüche**

1. Verfahren zum Steuern eines Verbrennungsmotors (1), bei dem eine Gruppe von Sollwerten (y_sp) von Ausgangsveränderlichen (y) des Motors bestimmt wird, diese Sollwerte auf ein inverses Modell ($M^{-1}$) des Motors angewendet werden und hieraus eine Gruppe von Steuersignalen (u) gewonnen wird, die an Regelmittel (11) des Motors anzulegen sind, **dadurch gekennzeichnet, dass** das inverse Modell des Motors ausgehend von einer iterativen Auswertung einer Schleife gewonnen wird, die einerseits ein direktes Modell (**M**) des Motors und andererseits eine Korrekturmatrix (**J-1**) der Eingangssignale des direkten Modells in Abhängigkeit seiner Ausgangssignale umfasst.

2. Verfahren nach Anspruch 1, **dadurch gekennzeichnet, dass**

   **a**) eine Gruppe von Anfangssteuersignalen ($u_0$) dem direkten Modell (**M**) des Motors zugeführt wird,
   b) der von dem Modell gelieferte Schätzwert (y_m) der Ausgangsveränderlichen mit der Gruppe von Sollwerten (y_sp) verglichen und hieraus ein Abweichungsvektor ($\Delta y$) gewonnen wird,
   c) dieser Abweichungsvektor mit der Korrekturmatrix (**$J^{-1}$**) aufbereitet wird, um hieraus einen Korrekturvektor ($\Delta u$) der Steuersignale zu gewinnen, und
   d) der Korrekturvektor zu der Gruppe von Anfangssteuersignalen addiert wird, um die Gruppe der an die Regelmittel anzulegenden Steuersignale (u) zu erhalten.

3. Verfahren nach Anspruch 2, **dadurch gekennzeichnet, dass** die Operationen a) bis d) mit einer vorgegebenen zeitlichen Wiederholfrequenz wiederholt werden und dass die Gruppe von Steuersignalen (u) des Schrittes d) als Gruppe von Anfangssteuersignalen ($u_0$) für den Schritt a) der folgenden Iteration dient.

4. Verfahren nach Anspruch 2, **dadurch gekennzeichnet, dass** eine Reihe von Iterationen der Operationen a) bis d) in jedem oberen Totpunkt des Motors ausgelöst wird, dass bei dem Schritt d) die aufeinanderfolgenden Korrekturvektoren ($\Delta u$) integriert werden und dass die Gruppe von Steuersignalen (u) des Schrittes d) an die Regelmittel nur dann angelegt wird, wenn der relative Abweichungsvektor ($\Delta y/y\_sp$) des Schrittes b) kleiner als eine vorgegebene Schwelle ist.

5. Verfahren nach Anspruch 4, **dadurch gekennzeichnet, dass** in jedem oberen Totpunkt des Motors die Gruppe von Anfangssteuersignalen ($u_0$) des Schrittes a) die Gruppe von Steuersignalen (u) ist, die im vorhergehenden oberen Totpunkt eingesetzt wurde.

6. Verfahren nach Anspruch 2, **dadurch gekennzeichnet, dass** die Korrekturmatrix (**$J^{-1}$**) durch Inversion oder Pseudoinversion der Jakobimatrix (**J**) der partiellen Ableitungen der Ausgangsveränderlichen (y) des Motors bezüglich der Steuersignale erhalten wird.

7. Verfahren nach Anspruch 6, **dadurch gekennzeichnet, dass** der Einfluss von sich langsam ändernden Parametern ($\theta$) bei der Berechnung der Koeffizienten der Jakobimatrix vernachlässigt wird und dass das direkte Modell einen Zustandsvektor (z) empfängt, der die aktuellen Betriebszustände (MAP, N, $\theta$) des Motors mit einer Messung dieser Parameter darstellt.

8. Verfahren nach Anspruch 6, **dadurch gekennzeichnet, dass** die Korrekturmatrix experimentell bei Versuchen zum Kalibrieren des Motors bestimmt wird und dass ihre Koeffizienten in einer Tabelle in Abhängigkeit von Betriebszuständen (MAP, N) des Motors gespeichert werden können.

9. Verfahren nach Anspruch 6, **dadurch gekennzeichnet, dass** die Jakobimatrix bei jeder Iteration ausgehend von einer Schätzung der partiellen Ableitungen bestimmt wird, welche aus der Berechnung der Änderung der Ausgangssignale des direkten Modells in Abhängigkeit von einer Einheitsänderung einer ihrer Eingangssignale um den laufenden Betriebspunkt gewonnen wird.

10. Verfahren nach Anspruch 2, **dadurch gekennzeichnet, dass** beim Start des Motors die Gruppe von Anfangs-steuersignalen ($u_0$) in Abhängigkeit von der Temperatur ($\theta$) des Motors bestimmt wird.

**Claims**

1. Method for controlling an internal combustion engine (1), wherein a set of set-point values (y_sp) of output variables (y) of an engine is determined, these set-point values are applied to an inverse model ($M^{-1}$) of the engine and a set of commands (u) to be applied to engine-adjusting means is obtained therefrom, **characterised in that** the inverse model of the engine is determined by iteratively using a loop including a direct model (M) of the engine, on the one hand, and a correction matrix ($J^{-1}$) for correcting inputs of the direct model as a function of outputs, on the other hand.

2. Method according to Claim 1, **characterised in that**

   a) a set of initial commands ($u_0$) is supplied to the direct model (M) of the engine,

   b) the estimate (y_m) of the output variables supplied by the direct model is compared with the set of set-point values (y_sp) and a difference vector ($\Delta y$) is obtained therefrom,

   c) this difference vector is processed with the correction matrix ($J^{-1}$) to obtain a correction vector ($\Delta u$) for the commands and

   d) the correction vector is summed with the set of initial commands to obtain the set of commands (u) for application to the adjusting means (11).

3. Method according to Claim 2, **characterised in that** operations a) to d) are repeated with a predetermined temporal recurrence and **in that** the set of commands (u) of step d) is used as a set of initial commands ($u_0$) in step a) of the subsequent iteration.

4. Method according to Claim 2, **characterised in that** a series of iterations of operations a) to d) is triggered each time the engine reaches top dead centre, **in that** successive correction vectors ($\Delta u$) are integrated in step d) and **in that** the set of commands (u) from step d) is applied to the adjusting means only when the relative difference vector ($\Delta y/y\_sp$) from step b) is below a predetermined threshold value.

5. Method according to Claim 4, **characterised in that** each time the engine reaches top dead centre, the set of initial commands ($u_0$) from step a) is the set of commands (u) applied at the previous top dead centre.

6. Method according to Claim 2, **characterised in that** the correction matrix ($J^{-1}$) is obtained by inverting or pseudo-inverting the Jacobian matrix (J) of partial derivatives of the output variables (y) of the engine with respect to the commands.

7. Method according to Claim 6, **characterised in that** the influence of slowly varying parameters ($\theta$) is neglected when calculating coefficients of the Jacobian matrix and **in that** the direct model receives a state vector (z) representing current operating conditions (MAP, N, $\theta$) of the engine including a measure of these parameters.

8. Method according to Claim 6, **characterised in that** the correction matrix is experimentally determined during engine optimisation tests and **in that** the coefficients are stored in a table as a function of operating conditions (MAP, N) of the engine.

9. Method according to Claim 6, **characterised in that** the Jacobian matrix is determined during each iteration from an estimate of the partial derivatives from calculation of the variation of the outputs of the direct model as a function of a unit variation in one of its inputs about the current operating point.

10. Method according to Claim 2, **characterised in that** the set of initial commands ($u_0$) is determined as a function of the engine temperature ($\theta$) when the engine is starting.

Figure 1 (Technique antérieure)

Figure 2 (Technique antérieure)

Figure 3

Figure 4

Figure 5A

Figure 5B

Figure 6